# EUROPEAN PATENT APPLICATION

(11) **EP 2 479 819 A2**
(43) Date of publication of application: **25.07.2012**
(21) Application number: 11275157.3
(22) Date of filing: 06.12.2011
(51) Int. Cl.: H01M 2/10

(54) **Vehicle battery device and lithium-iron battery module thereof**

(30) Priority: 21.01.2011 TW 100201455
(71) Applicant: Jackfame Epitec Co. Ltd., New Taipei City (TW)
(72) Inventor: Lin, Yung-Shen, New Taipei City 252 (TW)
(74) Representative: Powell, Timothy John

(57) **Abstract**

A vehicle battery device includes a housing, a lithium-iron battery module received in the housing, a lid engaged with the housing, and a first electrode and a second electrode electrically connected to the lithium-iron battery module and exposed from the lid. The lithium-iron battery module has a plurality of lithium-iron battery cells, and a first fastening unit and a second fastening unit disposed at two opposite sides of the lithium-iron battery cells, respectively, for fastening the lithium-iron battery cells. Therefore, the present invention can easily replace a failed lithium-iron battery cell with a new one without the need to perform a complicated desoldering/spot welding process as in the prior art, thereby facilitating maintenance of the vehicle battery device.

## Description

### BACKGROUND OF THE INVENTION

### 1. Field of the Invention

The present invention relates to vehicle battery devices, and, more particularly, to a vehicle battery device having a lithium-iron battery module.

### 2. Description of Related Art

In recent years, electric vehicles are becoming more and more popular along with the trend of energy saving and environment protection. The endurance of an electric vehicle depends on the characteristic of the battery used in the electric vehicle. Currently, a new generation of batteries has been developed to replace conventional lead-acid batteries.

In the new generation of batteries, lithium-iron batteries are quite popular. Compared with a conventional lead-acid battery, a lithium-iron battery is about one third of the lead-acid battery in weight. The lifetime of the lithium-iron battery is five times that of the lead-acid battery. In addition, the lithium-iron battery has a greater charge rate and better instantaneous current discharge capability.

However, current lithium-iron batteries, especially vehicle lithium-iron batteries, have some drawbacks. For example, the housing of the batteries is integrally formed and thus lacks a pressure adjustment mechanism. Therefore, an explosion may occur after long-term use. Further, lithium-iron battery cells of a lithium-iron battery module is usually electrically connected by soldering conductive plates therebetween. As such, when one of the lithium-iron battery cells fails to work, the conductive plates must be desoldered. Therefore, the battery often needs to be repaired in a factory instead of on site, thus complicating the repair process and prolonging the repair time.

Further, since the conductive plates are fastened to tab leads of the lithium-iron battery cells of the lithium-iron battery module by soldering, when the lithium-iron batteries is violently shaken or impacted, the conductive plates may be likely detached from the tab leads or cracked, thereby adversely affecting electrical connections between the lithium-iron battery cells and leading to failure of the lithium-iron battery module. It is quite serious for a user if, for example, the vehicle fails to work in the wild where the user cannot get any help.

Therefore, it is imperative to provide a vehicle battery device that allows a failed lithium-iron battery cells to be easily replaced with a new one.

### SUMMARY OF THE INVENTION

Accordingly, the present invention provides a vehicle battery device and a battery module thereof such that when a lithium-iron battery cell of the battery module fails to work, it can be easily replaced with a new one so as to facilitate maintenance of the vehicle battery device.

In order to achieve the above and other objects, the present invention provides a vehicle battery device, which comprises: a housing having a bottom portion, a sidewall portion extending upward from the bottom portion, and an inner space defined by the bottom portion and the sidewall portion; a lid having a top portion and an engaging portion extending from the top portion, wherein the engaging portion of the lid corresponds to the sidewall portion of the housing so as for the lid to be engaged with the housing; a lithium-iron battery module received in the inner space of the housing, wherein the lithium-iron battery module comprises a plurality of lithium-iron battery cells, and a first fastening unit and a second fastening unit disposed at two opposite sides of the lithium-iron battery cells, respectively, for fastening the lithium-iron battery cells; a first electrode electrically connected to the lithium-iron battery module and exposed from the top portion of the lid; and a second electrode electrically connected to the lithium-iron battery module and exposed from the top portion of the lid, wherein the first and second electrodes have different polarities.

The present invention further provides a vehicle lithium-iron battery module, which comprises: a plurality of lithium-iron battery cells; a first fastening unit having a first fastening base and a plurality of first conductive plates; and a second fastening unit having a second fastening base and a plurality of second conductive plates, wherein the first and second fastening bases are used for fastening two opposite sides of the lithium-iron battery cells, respectively, the first conductive plates are disposed on one side of the first fastening base opposite to the lithium-iron battery cells, the second conductive plates are disposed on one side of the second fastening base opposite to the lithium-iron battery cells, and the first and second conductive plates are electrically connected to tab leads of the lithium-iron battery cells, respectively.

According to the present invention, when one of the lithium-iron battery cells fails to work, it can be easily replaced with a new lithium-iron battery cell without the need to perform a desoldering/spot welding process as in the prior art. Further, the new lithium-iron battery cell is electrically connected to the other lithium-iron battery cells through the conductive plates so as to resume normal operation of the vehicle battery device. Therefore, the present invention facilitates maintenance of the vehicle battery device.

Furthermore, the bottom portion of the housing can have a plurality of bumps disposed thereon. As such, when the vehicle battery device is disposed on a battery base (not shown) of a vehicle, only the bumps come into contact with the battery base, thus forming an isolation space between the bottom portion of the housing and the battery base. Through air convection in the isolation space, the temperature of the vehicle battery device can be maintained within a certain range. The housing and the lid of the vehicle battery device can be made of a heat-resistant material such as a plastic material mixed with heat dissipating nano-particles, thereby preventing the vehicle battery device from being adversely affected by high temperature generated in an engine room of the vehicle during operation. Moreover, the lid of the vehicle battery device can have a one-way ventilation valve disposed thereon. Therefore, when the temperature of the vehicle battery device rises due to long-time operation, expanded air inside the vehicle battery device can easily flow out so as to reduce the pressure difference between the inside and outside of the vehicle battery device, thus avoiding the risk of explosion of the vehicle battery device that could otherwise occur due to a high pressure difference between the inside and outside of the vehicle battery device.

In addition, the first fastening unit of the lithium-iron battery module can comprise a plurality of first conductive plates, and the second fastening unit of the lithium-iron battery module can comprise a plurality of second conductive plates. Therein, each of the first and second conductive plates can have two fastening holes and a bridge section disposed between the two fastening holes. The bridge section provides pre-stress so as for the conductive plates to continuously abut against the tab leads of the lithium-iron battery cells, respectively, thus ensuring reliable electrical connections between the conductive plates and the lithium-iron battery cells even if the vehicle battery device is violently shaken or impacted and improving the stability of power supply by the vehicle battery device. Taking into account the thermal expansion, the bridge section can preferably have a thickness of 2mm so as to ensure stable conductivity between the lithium-iron battery cells under a high temperature environment.

The lithium-iron battery cells can be fastened to the first and second fastening bases such that when one of the lithium-iron battery cells fails to work, it can be easily disassembled from the first and second fastening bases and replaced with a new one to thereby resume normal operation of the vehicle battery device.

### BRIEF DESCRIPTION OF DRAWINGS

FIG. 1 is a perspective view of a vehicle battery device according to an embodiment of the present invention;
FIG. 2 is an exploded view of the vehicle battery device;
FIG. 3 is a perspective view of a lithium-iron battery module of the vehicle battery device;
FIG. 4 is a perspective view of a conductive plate of a first fastening unit of the lithium-iron battery module of the vehicle battery device; and
FIG. 5 is an exploded view of a vehicle battery device according to another embodiment of the present invention.

### DETAILED DESCRIPTION OF PREFERRED EMBODIMENTS

The following illustrative embodiments are provided to illustrate the disclosure of the present invention, these and other advantages and effects can be apparent to those in the art after reading this specification.

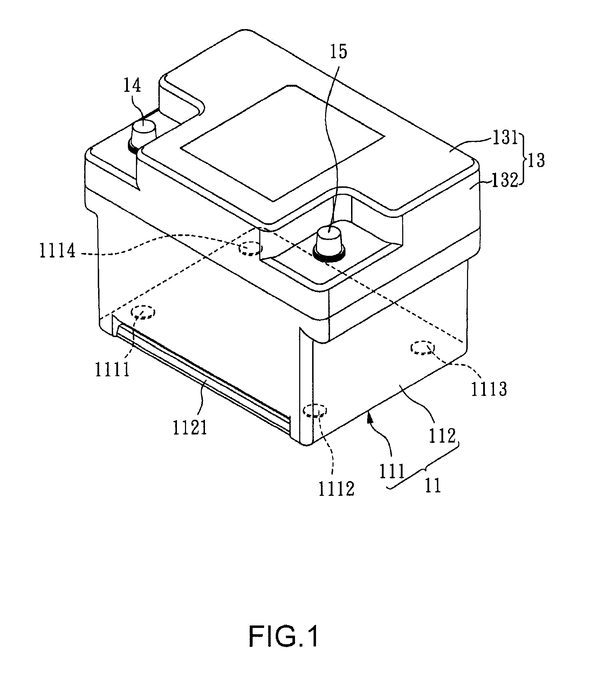

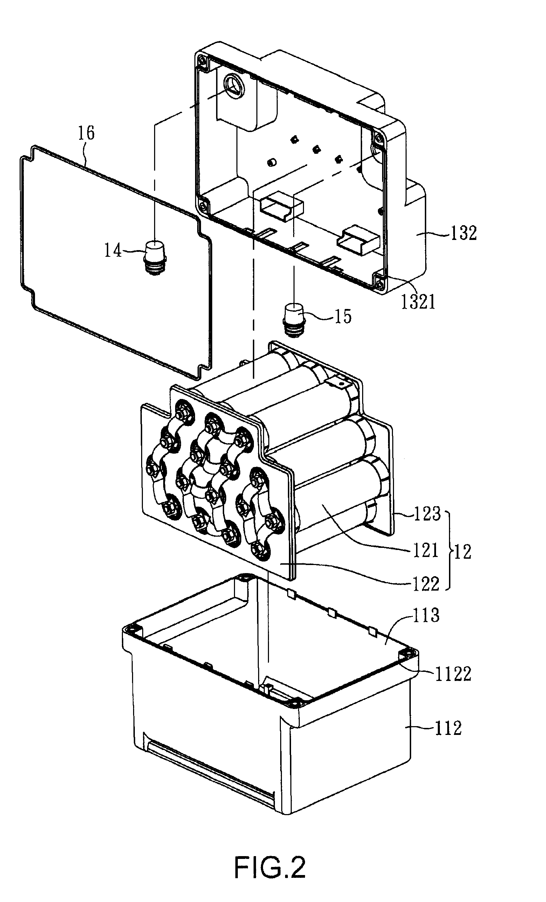

FIG. 1 is a perspective view of a vehicle battery device according to an embodiment of the present invention. FIG. 2 is an exploded view of the vehicle battery device. The vehicle battery device has a housing 11, a lithium-iron battery module 12, a lid 13, a first electrode 14, and a second electrode 15. The housing 11 has a bottom portion 111 and a sidewall portion 112 extending upward from the bottom portion 111. The lid 13 has a top portion 131 and an engaging portion 132 extending from the top portion 131.

Further, the sidewall portion 112 of the housing 11 has a stripped fastening slot 1121 for securely fastening the vehicle battery device of the present embodiment to a battery base (not shown) of a vehicle. Furthermore, the bottom portion 111 of the housing 11 has a plurality of bumps 1111, 1112, 1113 and 1114 disposed thereon such that, when the vehicle battery device is fastened to the battery base, only the bumps 1111, 1112, 1113 and 1114 come into contact with the battery base, thereby forming an isolation space between the bottom portion 111 of the housing 11 and the battery base. Therefore, during operation of the vehicle, the temperature of the vehicle battery device can be maintained within a certain range through air convection in the isolation space. Moreover, the housing 11 and the lid 13 can be made of a heat-resistant material such as a plastic material mixed with heat dissipating nano-particles and formed by injection molding. As such, the vehicle battery device of the present embodiment can be insulated from high temperature generated in an engine room of the vehicle during operation so as to avoid any adverse effect of the high temperature on the vehicle battery device such as temperature rise of the vehicle battery device.

Referring to FIGs.1 and 2, the lithium-iron battery module 12 of the vehicle battery device is received in an inner space 113 defined by the bottom portion 111 and the sidewall portion 112 of the housing 11. Further, the lithium-iron battery module 12 has a plurality of lithium-iron battery cells 121, a first fastening unit 122 and a second fastening unit 123.

The first electrode 14 and the second electrode 15 are exposed from the top portion 131 of the lid 13 for electrically connecting a power system of the vehicle and the vehicle battery device of the present embodiment. Referring to FIG. 2, the first electrode 14 and the second electrode 15 are electrically connected to the lithium-iron battery module 12. It should be noted that the first electrode 14 and the second electrode 15 have different polarities. As such, the power of the lithium-iron battery module 12 can be transmitted through the first electrode 14 and the second electrode 15 to the power system of the vehicle for use in operation.

The engaging portion 132 of the lid 13 is engaged with the sidewall portion 112 of the housing 11 so as to allow the lid 13 to be engaged with the housing 11 and isolated the lithium-iron battery module 12 received in the inner space of the housing 11 from the external environment. Referring to FIG. 1, a first receiving slot 1122 is disposed on a top edge of the sidewall portion 112 of the housing 11, and a second receiving slot 1321 is disposed on a bottom edge of the engaging portion 132 of the lid 13 and corresponding to the first receiving slot 1122. As such, when the engaging portion 132 of the lid 13 is engaged with the sidewall portion 112 of the housing 11, a seal ring 16 can be received between the first receiving slot 1122 and the second receiving slot 1321 for reducing the spacing between the engaging portion 132 and the sidewall portion 112, thus improving the sealing between the lid 13 and the housing 11 and achieving such as improved water and heat resistance.

It should be noted that in some application environments, the housing 11 and/or the lid 13 of the vehicle battery device can be made of an injection molding material mixed with an additive having a preferred heat reflective property and formed by injection molding. Therefore, the housing 11 and the lid 13 of the vehicle battery device can reflect external energy such as energy from the engine so as to prevent the energy from being transmitted into the vehicle battery device through the housing 11 or the lid 13, thereby maintaining the temperature of the vehicle battery device within a certain range.

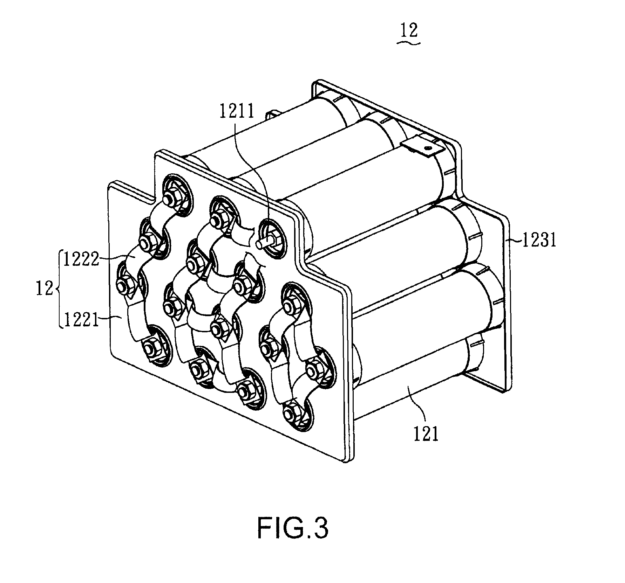

Referring to FIG. 3, the lithium-iron battery module 12 of the vehicle battery device of the present embodiment has a plurality of lithium-iron battery cells 121, a first fastening unit 122 and a second fastening unit 123. The lithium-iron battery cells 121 are in the same shape and are stacked on one another so as to save the space occupied by the overall lithium-iron battery module 12 and further reduce the overall size of the vehicle battery device. Furthermore, the first fastening unit 122 and the second fastening unit 123 are disposed at two opposite sides of the lithium-iron battery cells 121 for fastening the lithium-iron battery cells 121.

In the present embodiment, the lithium-iron battery cells 121 can be tubular lithium-iron battery cells and have the same output voltage and capacity (for example, 3.2V/10Ah). Furthermore, according to different required output voltages and battery capacities of the vehicle battery device, the number of the tubular lithium-iron battery cells can be varied and the tubular lithium-iron battery cells can be electrically connected to one another in different ways.

For example, to provide an output voltage of 12.8V and a battery capacity of 40Ah, the lithium-iron battery cells 121 of the lithium-iron battery module 12 can be electrically connected as follows.

First, four tubular lithium-iron battery cells are electrically connected in series so as to form a tubular lithium-iron battery cell group that provides an output voltage of 12.8V. Then, three other groups each consisting of four tubular lithium-iron battery cells electrically connected in series are formed. Thereafter, the four groups are electrically connected in parallel for providing a battery capacity of 40Ah. Such connection is generally referred as 4S4P. Finally, two ends of the lithium-iron battery module 12 are electrically connected to the first electrode 14 and the second electrode 15 of FIG. 1, respectively, so as to output a voltage of 12.8V and a battery capacity of 40Ah.

Referring to FIG. 3, the first fastening unit 122 of the lithium-iron battery module 12 has a first fastening base 1221 and a plurality of first conductive plates 1222. The second fastening unit 123 has a second fastening base 1231 and a plurality of second conductive plates (not shown). The first conductive plates 1222 are fastened at one side of the first fastening base 1221 opposite to the lithium-iron battery cells 121, and electrically connected to tab leads 1211 of the lithium-iron battery cells 121, respectively.

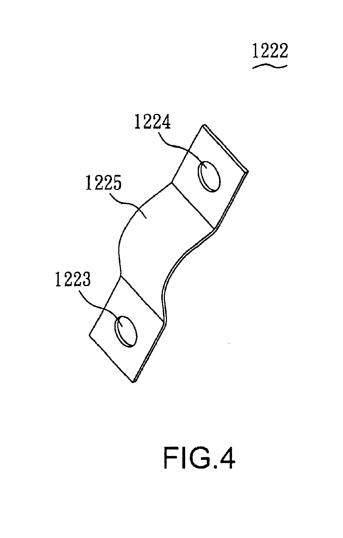

FIG. 4 is a perspective view of one of the first conductive plates 1222. The first conductive plate 1222 has two fastening holes 1223, 1224 and a bridge section 1225 disposed between the two fastening holes 1223, 1224. Referring to FIG. 3, when the first conductive plates 1222 are mounted to the first fastening frame 1221, the bridge sections 1225 of the first conductive plates 1222 protrude towards a direction opposite to the lithium-iron battery cells 121. In addition, each of the first conductive plates 1222 is fastened to the first fastening base 1221 through the two fastening holes 1223, 1224 and nuts fastened to the tab leads 1211.

Since the two opposite sides of the lithium-iron battery cells 121 are fastened to the first fastening base 1221 and the second fastening base 1231 through screw fastening, when one of the lithium-iron battery cells 121 fails to work, it can be easily disassembled by unscrewing the corresponding nuts. As such, the failed lithium-iron battery cell 121 can be easily replaced with a new lithium-iron battery cell 121. Further, the nuts are screwed tightly so as to fasten the new lithium-iron battery cell 121 to the first fastening base 1221 and the second fastening base 1231.

In the lithium-iron battery module 12 of the vehicle battery device of the present embodiment, the tab leads 1211 of the lithium-iron battery cells 121 are passed through the fastening holes 1223, 1224 of the first conductive plates 1222, respectively. Therefore, after the lithium-iron battery cells 121 are fastened to the first fastening base 1221 and the second fastening base 1231, the first conductive plates 1222 can be electrically connected to the tab leads 1211 of the lithium-iron battery cells 121, respectively, through screw fastening.

Therefore, the present embodiment can easily replace a failed lithium-iron battery cell 121 with a new one without the need to perform a complicated desoldering/spot welding process as in the prior art. Further, the new lithium-iron battery cell 121 is electrically connected to the other lithium-iron battery cells 121 through the conductive plates so as to resume normal operation of the vehicle battery device.

Referring to FIG. 4, each of the first conductive plate 1222 has a bridge section 1225 which provides pre-stress so as for the first conductive plates 1222 to continuously abut against the tab leads 1211 of the lithium-iron battery cells 121, thus ensuring reliable electrical connections between the first conductive plates 1222 and the lithium-iron battery cells 121 even if the vehicle battery device is violently shaken or impacted.

Taking into account the thermal expansion, the bridge section 1225 preferably has a thickness of 2mm so as to ensure stable conductivity between the lithium-iron battery cells 121 under a high temperature environment.

Further, the vehicle battery device can have different connection ways by changing the position and number of the first conductive plates 1222 so as to output different voltages and battery capacities according to practical needs.

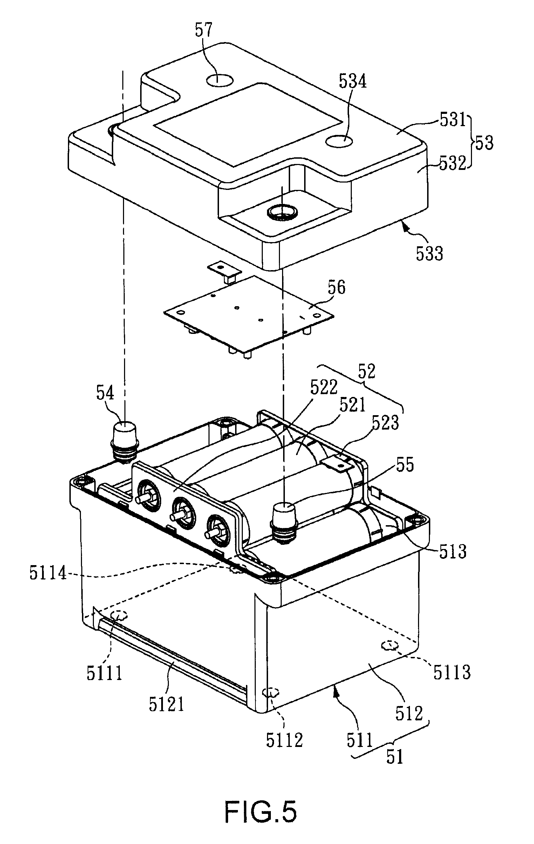

FIG. 5 is an exploded view of a vehicle battery device according to another embodiment of the present invention. The vehicle battery device has a housing 51, a lithium-iron battery module 52, a lid 53, a first electrode 54, a second electrode 55 and a power management unit 56. The housing 51 has a bottom portion 511 and a sidewall portion 512 extending upward from the bottom portion 511. The lid 53 has a top portion 513 and an engaging portion 532 extending from the top portion 531.

The sidewall portion 512 of the housing 51 has a stripped fastening slot 5121 for securely fastening the vehicle battery device of the present embodiment to a battery base (not shown) of a vehicle. Furthermore, the bottom portion 511 of the housing 51 has a plurality of bumps 5111, 5112, 5113 and 5114 disposed thereon such that, when the vehicle battery device is fastened to the battery base, only the four bumps come into contact with the battery base, thereby forming an isolation space between the bottom portion 511 of the housing 51 and the battery base. As such, during operation of the vehicle, the temperature of the vehicle battery device can be maintained within a certain range through air convection in the isolation space.

Referring to FIG. 5, the lithium-iron battery module 52 is received in an inner space 513 defined by the sidewall portion 512 of the housing 51. Further, the lithium-iron battery module 52 has a plurality of lithium-iron battery cells 512, a first fastening unit 522 and a second fastening unit 523.

The first electrode 54 and the second electrode 55 are disposed on the top portion 531 of the lid 53 for electrically connecting a power system of the vehicle and the vehicle battery device of the present embodiment. Referring to FIG. 5, the power management unit 56 is disposed in an inner space 533 defined by the engaging portion 532 of the lid 53 and electrically connected to the lithium-iron battery module 52, the first electrode 54 and the second electrode 55. Therefore, the power of the lithium-iron battery module 52 can be sequentially transmitted through the power management unit 56 (receive control of the power management unit 56), the first electrode 54 and the second electrode 55 to the power system of the vehicle for use in operation.

In addition, referring to FIG. 5, the lid 53 of the vehicle battery device has an emergency rescue switch 534 which can be pressed by a user in the case of emergency. The emergency rescue switch 534 can be a capacitive sensing switch embedded in the lid 53 so as to improve water resistance and appearance of the battery device. Furthermore, the emergency rescue switch 534 is electrically connected to the power management unit 56 such that, once the emergency rescue switch 534 is pressed, the power management unit 56 is driven to perform an emergency rescue program (such as self-rescue startup). In general, the power management unit 56 is used for managing the power level of the lithium-iron battery module 52. For example, when the power level of the lithium-iron battery module 52 is lower than a predefined level since the vehicle light is turned on for a long time, the power management unit 56 turns off the vehicle battery device such that the remaining power can be reserved for use in the above-described emergency rescue program.

Referring to FIG. 5, a one-way ventilation valve 57 is further disposed on the lid 53 so as to allow the air in the inner spaces 513 and 533 to flow out while preventing the air in the external environment from entering the vehicle battery device of the present embodiment. Therefore, when the temperature of the vehicle battery device rises after a long-term operation, expanded air inside the vehicle battery device can easily flow out so as to reduce the pressure difference between the inside and outside of the vehicle battery device, thereby avoiding the risk of explosion of the vehicle battery device that could otherwise occur due to a high pressure difference between the inside and outside of the vehicle battery device and effectively increasing the safety of the vehicle battery device.

During operation of the vehicle battery device of the present embodiment, the engaging portion 532 of the lid 53 is engaged with the sidewall portion 512 of the housing 51 such that the lid 53 is engaged with the housing 51 to thereby isolate the lithium-iron battery module 52 from the external environment.

Since the lithium-iron battery module 52 of the present embodiment has a structure similar to that of the first embodiment, detailed description thereof is omitted herein.

The above-described descriptions of the detailed embodiments are intended to illustrate the preferred implementation according to the present invention but are not intended to limit the scope of the present invention. Accordingly, all modifications and variations completed by those with ordinary skill in the art should fall within the scope of present invention defined by the appended claims.

## Claims

1. A vehicle battery device, comprising:
a housing having a bottom portion, a sidewall portion extending upward from the bottom portion, and an inner space defined by the bottom portion and the sidewall portion;
a lid having a top portion and an engaging portion extending from the top portion, wherein the engaging portion of the lid corresponds to the sidewall portion of the housing so as for the lid to be engaged with the housing;
a lithium-iron battery module received in the inner space of the housing, wherein the lithium-iron battery module comprises a plurality of lithium-iron battery cells, and a first fastening unit and a second fastening unit disposed at two opposite sides of the lithium-iron battery cells, respectively, for fastening the lithium-iron battery cells;
a first electrode electrically connected to the lithium-iron battery module and exposed from the top portion of the lid; and
a second electrode electrically connected to the lithium-iron battery module and exposed from the top portion of the lid,
wherein the first and second electrodes have different polarities.

2. The device of claim 1, wherein the bottom portion of the housing has a plurality of bumps disposed thereon.

3. The device of claim 1, wherein the sidewall portion of the housing has a first receiving slot formed on a top edge thereof, and the engaging portion of the lid has a second receiving slot formed on a bottom edge thereof and corresponding in position to the first receiving slot.

4. The device of claim 3, further comprising a seal ring received in the first and second receiving slots when the lid is engaged with the housing.

5. The device of claim 1, wherein the sidewall portion of the housing has a stripped fastening slot formed therein.

6. The device of claim 1, further comprising a power management unit electrically connected to the lithium-iron battery module, the first electrode and the second electrode.

7. The device of claim 6, wherein the top portion of the lid has an emergency rescue switch electrically connected to the power management unit, the emergency rescue switch being a capacitive sensing switch.

8. The device of claim 1, wherein the top portion of the lid has a one-way ventilation valve disposed thereon.

9. The device of claim 1, wherein the first fastening unit comprises a first fastening base and a plurality of first conductive plates, and the second fastening unit comprises a second fastening base and a plurality of second conductive plates.

10. The device of claim 9, wherein the first conductive plates are disposed on one side of the first fastening base opposite to the lithium-iron battery cells, the second conductive plates are disposed on one side of the second fastening base opposite to the lithium-iron battery cells, and the first and second conductive plates are electrically connected to tab leads of the lithium-iron battery cells, respectively.

11. The device of claim 9, wherein each of the first and second conductive plates has two fastening holes and a bridge section disposed between the two fastening holes and protruding towards a direction opposite to the lithium-iron battery cells.

12. The device of claim 9, wherein the first and second fastening bases are used for fastening the two opposite sides of the lithium-iron battery cells, respectively.

13. The device of claim 1, wherein the lithium-iron battery cells are tubular lithium-iron battery cells electrically connected in parallel or in series.

14. A vehicle lithium-iron battery module, comprising:
a plurality of lithium-iron battery cells;
a first fastening unit having a first fastening base and a plurality of first conductive plates; and
a second fastening unit having a second fastening base and a plurality of second conductive plates,
wherein the first and second fastening bases are used for fastening two opposite sides of the lithium-iron battery cells, respectively, the first conductive plates are disposed on one side of the first fastening base opposite to the lithium-iron battery cells, the second conductive plates are disposed on one side of the second fastening base opposite to the lithium-iron battery cells, and the first and second conductive plates are electrically connected to tab leads of the lithium-iron battery cells, respectively.
